Europäisches Patentamt

European Patent Office

Office européen des brevets

(11) Publication number: **0 294 890**
**A2**

## (12) EUROPEAN PATENT APPLICATION

(21) Application number: **88201145.5**

(22) Date of filing: **06.06.88**

(51) Int. Cl.⁴: **G06F 15/16 , H04L 11/20**

(30) Priority: **09.06.87 GB 8713460**

(43) Date of publication of application:
**14.12.88 Bulletin 88/50**

(84) Designated Contracting States:
**DE FR GB SE**

(71) Applicant: **N.V. Philips' Gloeilampenfabrieken**
**Groenewoudseweg 1**
**NL-5621 BA Eindhoven(NL)**

(72) Inventor: **Twist, Robert Adrianus Hendrik**
**c/o INT. OCTROOIBUREAU B.V. Prof.**
**Holstlaan 6**
**NL-5656 AA Eindhoven(NL)**
Inventor: **Annott, Jan Koenraad**
**c/o INT. OCTROOIBUREAU B.V. Prof.**
**Holstlaan 6**
**NL-5656 AA Eindhoven(NL)**

(74) Representative: **Strijland, Wilfred et al**
**INTERNATIONAAL OCTROOIBUREAU B.V.**
**Prof. Holstlaan 6**
**NL-5656 AA Eindhoven(NL)**

(54) Data processing system.

(57) A data processing system including a host computer linked by a gateway to a parallel, general purpose computing system comprising a plurality of interconnected nodes. Each node includes a data processor and a communication processor. An information packet originated by one of the nodes is routed by one or more hardware linked communication processors in the other nodes until it reaches its destination node whereat it is transferred by the communication processor to its associated data processor thereby removing it from the communications network of the data procesing system. Deadlock and starvation are avoided by a technique termed class climbing. In class climbing an acyclic directed graph is superimposed on the physical communications network by assigning a direction to each of the physical links. The class of an information packet remains unchanged whilst it is travelling according to the direction of the acyclic directed graph associated with its class. However the class of a packet is incremented by one each time it has to change its travel from according to, or against, the direction of the acyclic directed graph associated with its class.

Another feature of the switching of information packets between the communication processors is that a communication processor receiving an information packet initiates a request for the delivery of the information packet from its neighbour rather than vice versa.

EP 0 294 890 A2

## "Data Processing System"

The present invention relates to a data processing system which has particular, but not exclusive, application in a parallel, general purpose computer system.

The ever increasing demand for data processing power in many present day scientific and engineering applications has lead the computing industry to consider parallel computers and computing. As a consequence of this consideration the general approach to improving the performance of computer systems has been to design them as a large number of concurrently operating processing elements, and with largely varying approaches to architectural and programming principles. Typically such a system will comprise a pluarlity of self-contained computers, each having a central or data processing unit (DP), a local memory and communication processor (CP), which are connected in a direct packet switching network.

The function of a collection of communication processors (CP), connected according to a specific network configuration, and each on its own connected to its associated data processing unit (DP). is the receipt of fixed length data-packets from the DP (source), to transport these in mutual co-operation along one of the shortest paths to the destination CP, indicated in the packet, after which this CP passes on the packet to its own DP. Each CP has a unique identity to distinguish it from the others.

This function is known per se. For example in the Cosmic Cube, see C.L. Seitz: The Cosmic Cube Comm. ACM, Vol. 28 No. 1, January 1985, and the iPsc of INTEL, derived from Seitz, the function has been implemented largely in software. Only the network and the node-to-node transport are implemented in hardware. On intermediate nodes, the DP makes in software the choice for the next path to be taken. In the Transputer of Inmos the function has been implemented with the same distribution over hardware and software. Dally and Seitz, see W.J. Dally and C.L. Seitz. The Torus Routing Chip, Distributed Computing (1986)1:187 to 196, have made a design for their "Torus Routing Chip", to realize, in the Cosmic Cube, the function completely in hardware. An important difference between realising a design in software and a design in hardware is the communication delay in such packet switching networks. By way of example in the Intel Hypercube a communication step in software between two neighbours requires 1 millisecond whereas in a hardwired communications processor only some 10 to 20 microseconds are required. However a problem with direct packet switching networks is that unless they are carefully designed and operated they may be prone to deadlock and starvation which is undesirable.

An object of the present invention is to improve the throughput of a data processing system comprising a plurality of self-contained computers.

Accordingly to one aspect of the present invention there is provided a computer information packet switching system comprising a plurality of stations which are interconnected by means of a connection network, wherein each station has means for communicating with at least one other station, means for the transient storage of packages of information and means for issuing a request for the transfer of an information packet from another station to its own station.

By a receiving processor taking the initiative for the transport of a data packet, it enables the sending processor to postpone the decision of which neighbouring communication processor will be the "next neighbour" if a packet can be sent to more than one neighbour. Further the decision can be postponed until it is sure that the input server has reserved a storage unit for the packet. In contrast if the initiative for the transport were to be taken by the sender, then for some packets at the sender it should be decided (at least temporarily) to which "next neighbour" to send it, without knowing whether or not it can be accepted by that neighbour.

In an embodiment of the computer packet switching system made in accordance with the present invention an anti-deadlock protocol is superimposed on the connection network. The protocol is such that a class (in the range 0 to Nclass - 1, Nclass being the number of classes available) is assigned to each packet in the network.

- For each of the classes an acyclic directed graph is superimposed on the physical network by assigning a direction to each of the physical links. The class of a packet remains as it is as long as the packet travels according to the direction of the acyclic directed graph associated with its class, but the class of a packet is incremented by one each time the packet makes a hop against the direction of the acyclic directed graph associated with its current class.

According to a second aspect of the present invention there is provided a station for use in an information packet switching system, said station comprising a communication interface, a data processor and a data bus interconnecting the communication interface, and the data processor, the communication interface comprising a communication processor and an interface processor for coupling the communication processor to the data bus, wherein the communication processor comprises

- input servers able to request a data packet from the interface processor or from an output server of the communication processor of another station to which it is connected, each said input server being also able to receive a data packet which it had requested earlier,
- a packet storage in which data packets can be temporarily stored,
- output servers able to receive a request for a data packet from the interface processor or from an input server of the communication processor of another station to which it is connected, each said output server also being able to transmit a data packet for which it earlier received a request,
- a routing table indicating for each destination via which output servers a packet with that destination may make its next hop either to the interface processor or to a neighbouring station,
- a central administration able to instruct an input server to request a data packet, said central administration also being able to move a data packet received by an input server from that input server to the packet storage, said central administration also being able to move a data packet from the packet storage to an output server which had received a request, said data packet being allowed, according to the routing table, to make its next hop via said output server.

In an implementation of the data processing system made in accordance with the present invention the connection network has diameter (d) at least equal to d = 1. Each connection between two stations has a preferred direction such that all rings which can be formed from a series of at least two connections have acyclically oriented preferred directions. The package storage in each station comprises a plurality of storage units divided into classes arrayed in an ascending order series. Each station has an allocation element for allocating locally formed information packets to one of the plurality of storage units and for allocating information packets received through the network to a storage unit of the same class as the storage unit to which information was allocated in the previous station if there is no alternation between the preferred directions of the incoming network connection and the outgoing network connection, but to the storage unit of a class raised by one with respect to the class of the storage unit to which the information packet was allocated in the previous station if there is an alternation between the preferred directions of the incoming network connection and the outgoing network connection.

Deadlock is avoided in the data processing system made in accordance with the present invention by a method which will be referred hereinafter as class climbing. Additionally by ensuring a fair usage of the classes and administration of the temporal order of arrival of datapackets the risk of starvation occurring is avoided.

The present invention will now be described, by way of example, with reference to the accompanying drawings, wherein:

Figure 1 is a block schematic diagram of a data processing system,

Figure 2 is a block schematic diagram of a typical node used in the system shown in Figure 1,

Figure 3 is a block schematic diagram diagram of an interface processor and a communication processor,

Figure 4 is a block schematic diagram illustrating two neighbouring communication processors,

Figure 5 is a diagram of a typical packet switching network consisting of 5 nodes formed by five communication processors,

Figure 6 illustrates loops of atomic actions for input and output servers,

Figure 7 shows pictorially one of the loops of atomic actions,

Figure 8 illustrates an embodiment of a communication processor and the organisation of the storage units,

Figure 9 illustrates a network of linked nodes,

Figure 10 illustrates an acyclic directed graph superimposed on the network shown in Figure 9, and

Figure 11 is a floorplan of a communication processor comprising two virtual networks of 8 classes each constructed using one physical network of 16 classes, and

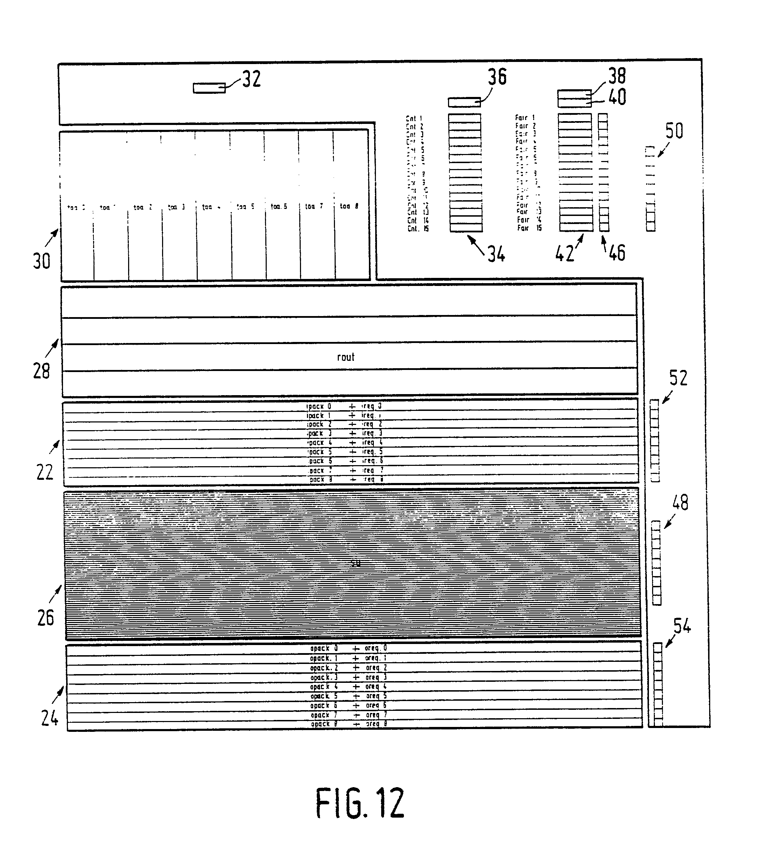

Figure 12 is a floorplan of a communication processor implemented as a VLSI circuit.

In the drawings the same references have been used to illustrate corresponding parts.

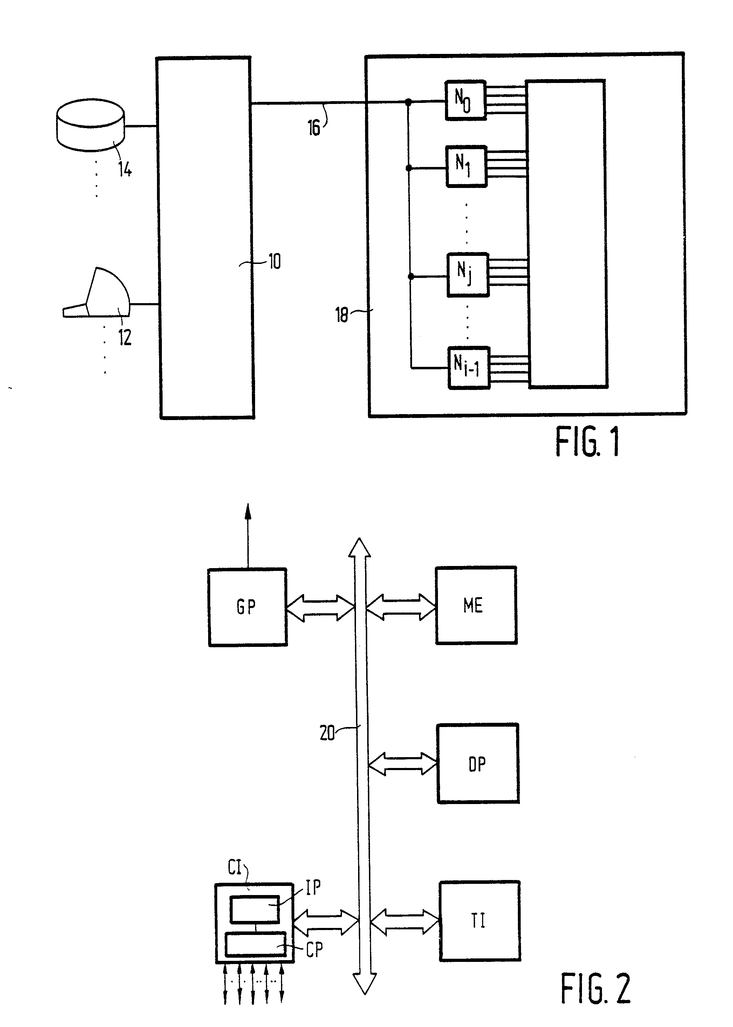

Figure 1 illustrates an overall data processing system comprising a host computer 10, such as a UNIX VAX 11/785, to which are connected input terminals 12, output devices 14, such as printers, and, via a gateway 16, a parallel, general purpose computing system 18. The general purpose computing system 18 comprises a plurality of i parallel connected nodes $N_0....N_{i-1}$.

The host computer 10 provides the functions of software development, such as editing, compiling and linking, and a filing system because the system 18 does not comprise terminals and/or storage such as discs. The gateway 16 enables the following operations to be implemented: downloading of the operating system in the system 18, downloading of the root object; downloading of a demand driven parallel object-oriented language (POOL) code; file the inputs and outputs of the POOL program; monitoring and debugging of the POOL program; downloading of the test software and the monitoring and debugging of the Operating System and hardware. The system 18 comprises a point-to-point communication network which functions by message passing.

Figure 2 illustrates block schematically the data paths of one of the nodes N shown in Figure 1. A 32 bit wide data bus 20 has connected to it a gateway processor GP, a memory ME, a data processor DP, a timer TI and a communication interface CI comprising an interface processor IP and a communication processor CP. The gateway processor GP provides hardware support for communication between the host 10 (Figure 1) and the node and may comprise an Ethernet controller 68590. The memory ME comprises a memory management unit, such as a Motorola 68851 together with 4 megabyte RAM (random access memory) and a PROM. The memory ME hosts the operating system and accomodates the code, the stacks and the message queues of the residing information packets which are integrated units of data and procedures. The data processor DP typically comprises a Motorola 68020 microprocessor and a 68881 floating point coprocessor. The timer TI provides the functions of time-out for scheduling and of a stop watch for monitoring, debugging and allocation. The communication interface CI provides hardware support for communication between nodes, particularly routing (or forwarding) of information packets (256 bits) to neighbouring nodes without the involvement of the data processor DP. Typically the number of parallel running links is between 4 and 16. In operation the data processor DP packages the messages and copies the packets, in 32 bit portions, to the buffer space of the communication interface CI. Those packets which have reached their destination are buffered in the communication interface and are copied to the memory ME by the data processor DP. Packets which have not yet reached their destination are buffered in the communication interface CI only whilst waiting to be forwarded. A convenient implementation of the communication interface CI is as a VLSI circuit.

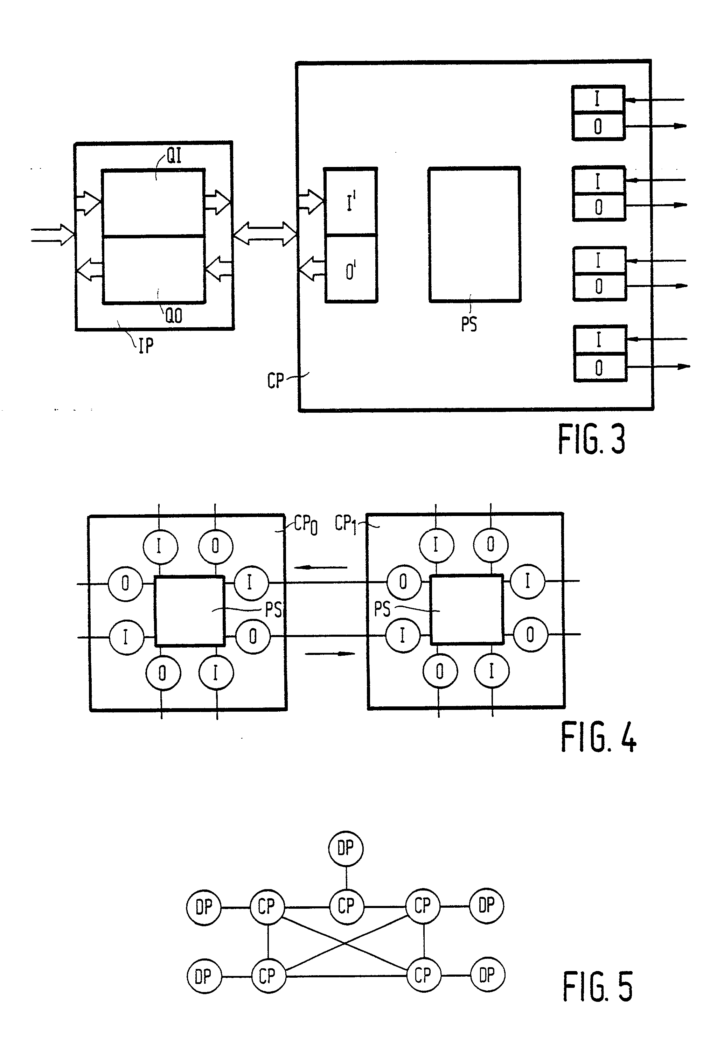

The architecture of the communication interface is shown in Figure 3. The interface processor IP comprises FIFO (first in, first out) storages which form queues, in both directions, between the data processor DP and the Communication processor CP and effectively decouples these processors. The input FIFO has been referenced QI and the output FIFO as QO. The communication processor CP takes care of the routing of packets coming from the interface processor IP and neighbouring communication processors CP. Each communication processor CP contains a number of parallel running input I and output O servers and packet storage PS composed of storage units in which the packets are buffered on the basis of a storage unit containing exactly one packet. The input server $I'$ receives packets from the input FIFO QI and the output server $O'$ supplies packets to the output FIFO QO.

Figure 4 illustrates two neighbouring communication processors $CP_0$ and $CP_1$. The connection between neighbouring communication processors is bidirectional; one output and one input server at one side are connected to one input and one output server respectively at the other side; principally, by connecting only an input server at one side to an output server at the other side, a unidirectional connection could be established. The packet transport direction is always from an output server to an input server. The input and output servers of one communication processor operate quite independently, their only interaction being via the packet storage PS, to which they have mutually exclusive access. The central administration (not shown in Figure 4) administers via which output servers a packet may be sent (routing), and manages the packet storage such that no deadlock occurs.

Figure 5 illustrates a packet switching network consisting of five communication processors and their associated data processors. Each communication processor CP uses one of its connections to communicate with its corresponding data processing element DP; all other connections can be used to communicate with other communication processors CP. The maximum number of connections of a communication processor is an implementation constant which does not have any influence on the design proper. When a data processing element DP wants to send a message to another data processing element, the message is split up into a number of packets, each packet containing a part of the message contents and some routing information such as the address of its final destination. The network of communication processors CP forwards the packets to their destination in one or more hops.

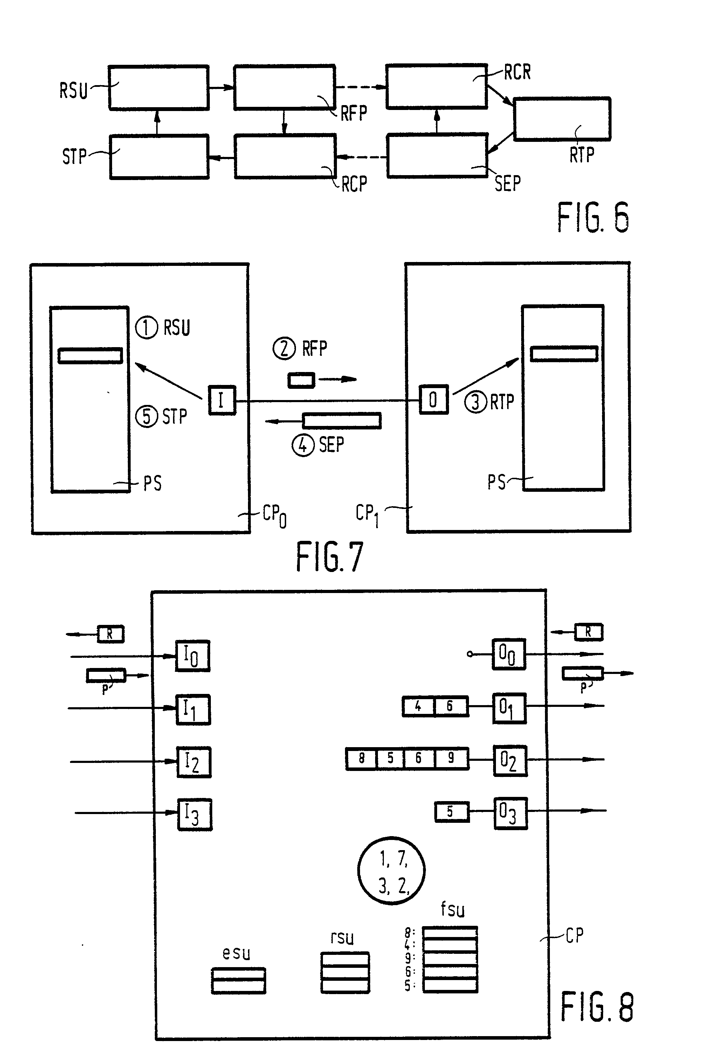

The activities of the input and output servers consist of short infinitely repeated loops of atomic actions; each atomic action either accesses the packet storage or is a synchronization and communication action together with the complementary server at a neighbouring communication processor. Those loops of atomic actions are shown in Figures 6 and 7. The actions "reserve storage unit" RSV and "store packet" STP access the packet storage corresponding to the input server I; the action "retrieve packet", RTP, accesses the packet storage corresponding to the output server O. The actions "request for packet", RFP, and "receive packet" RCP of the input server synchronize with the actions "receive request" RCR and "send packet" SEP respectively of the output server.

The succession of steps as far as such a pair of connected complementary servers is concerned can be deduced from Figure 6, to be as follows.

- Firstly, the input server I reserves a storage unit RSV in the packet storage of its communication processor CP and composes a corresponding request.
- Secondly, the input server I sends the request to the output server O of the neighbouring communication processor: this action is synchronized with the reception of that request by the output server.
- Thirdly, the output server O retrieves from the packet storage (RTP) of the sending communication processor a packet matching the request.
- Fourthly, the output server sends the packet to the input server, in synchronization with the reception of the packet by the input server.
- Fifthly, the input server stores the packet STP in the packet storage in the previously reserved storage unit.

Now we are back where we started; this sequence of five steps is repeated infinitely.

Figure 7 shows one cycle of the link protocol.

The parallel running Input and Output servers access the same package storage during the actions: reserve storage unit RSU; store packet STP and retrieve packet RTP. In order to ensure that the sequence of operations can be completed without interruption by say the storage of another packet in the already reserved storage unit then the protocol is arranged so that it is not allowed for multiple servers to access the package storage at the same time, that is mutually exclusive access is ensured. As the actions RSU, STP and RTP are regarded as being critical then they are implemented by using semaphore named "mutex". Thus: P(mutex) means "Enter critical section" and if necessary join the queue and wait for your turn.

V(mutex) means "Leave critical section" and, if servers are waiting, activate the server which is at the front of the queue.

In consequence the algorithm for the input process can be written

```
|[ do true
    -> P(mutex)
    ; reserve a storage unit
    : V(mutex)
    ; send a "send packet" request to Output
    ; receive packet sent by Output
    ; P(mutex)
    ; put packet in Packet Storage
    : V(mutex)
    od
]|.
```

and that for the output process can be written

```
|[ do true
    -> receive "send packet" request sent by Input
    ; P(mutex)
    : get a packet from Packet Storage
    ; V(mutex)
    ; send packet to Input
    od
]|.
```

Figure 8 illustrates an embodiment of a communication processor and the organisation of the storage units. The input and output servers $I_0$ to $I_3$ and $O_0$ to $O_3$, respectively, are shown. The rectangles with arrows indicate the transmission and reception of requests, R, and of packets, P.

A routing table (not shown) contains for every final destination of a packet a list of output servers via which a packet with that destination may make the next step on its way to its final destination. A temporal order administration is arranged to form FIFO queues of waiting packets at the output servers. A new packet is placed at the tail of each of the matching queues as indicated by the routing table. In one of the queues, a packet, say the packet "6" at output server $O_1$, will be handled first and is sent out by this server. Simultaneously this packet "6" is removed from all the other queues, for example the queue at the output server $O_2$, at that communication processor.

In the lower part of Figure 8, the stacks of empty storage units esv, reserved storage units, rsv, and full storage units fsv are shown. The circle in the centre of Figure 8 contains all the addresses of the set of free storage units, that is, the empty and reserved storage units.

The initiative for the transport of a packet is not taken by the sending communication processor but by

5

the receiving one. This initiative by the receiving processor enables the sending processor to postpone the decision of which neighbouring communication processor will be the "next neighbour" if a packet can be sent to more than one neighbour; the decision can be postponed until it is sure that the input server I has reserved a storage unit for the packet. If the initiative for the transport was to be taken by the sender, then for some packet at the sender it should be decided (at least temporarily) to which "next neighbour" to send it, without knowing whether or not it can be accepted by that neighbour.

Giving the initiative for the transport of a packet to the receiver rather than to the sender has another consequence, it may happen that an output server receives from its neighbour a request for a packet at a moment that the corresponding packet storage has no packet matching the request. In such a case the output server O is, for reasons of deadlock and starvation, not allowed to wait infinitely long until a suitable packet arrives in the packet storage. Instead the output server then without bounded time must cancel the request from the input server: a special case of the action send packet (SEP) in Figure 6. As a consequence the input server will perform a special case of the action store packet (STP); it will not fill but free the storage unit reserved previously.

For reasons of deadlock and starvation the implementation of the actions accessing the packet storage cannot be as simple as would be desirable. It can easily be shown that deadlock can occur if the action "reserve storage unit" (RSU) would be allowed as long as the packet storage has at least one storage unit neither occupied by a packet nor reserved by some input server. Then it would be possible to fill the packet storage of two neighbouring communication processors with packets which all have the other communication processor as their only possible "next neighbour", thus obstructing any further progress of these two communication processors because they would be deadlocked.

For the sake of completeness an algorithimic description of the communication processor will now be given. This description will be done by discussing the various data structures present in the communication processor and by presenting algorithms for the usage of these data structures to realize the wanted functionality of the communication processor. Additionally the principles of class climbing and the used link protocol will be described.

In order to facilitate an understanding of the present invention the notation used will be described. Firstly, an infix period (e.g. Reservable.j) is used as a common symbol for array indexing, field selection etc.; parenthesis pairs (e.g. match(a,b)) are used to denote subroutines, possibly having side effects and possibly returning some result; of course parentheses are also used for grouping of subexpressions.

Further, the usual guarded command language of E.W. Dijkstra, "Guarded Commands, Nondeterminancy and Formal Derivation of Programs", Comm. ACM 18(8) (1975) 453-457 is extended with a parallel statement. In a parallel statement, of the form

par <guarded command set> rap,

all guarded lists with true guards are selected and they are executed in parallel. The parallel statement terminates when all guarded lists have terminated.

Above that, sometimes quantification is used to form guarded command sets. For example the notation

([] i: O<i< = 3: stuff.i)

is used as a shorthand for

stuff.1 [] stuff.2 [] stuff.3.

Finally, as all the communication processors have the same data structures, the name of a communication processor is sometimes added as a subscript to the name of a data structure (for example $rout_v$) to stress that reference is meant to the data structure with that name present on that specific communication processor.

The data traffic between connected complementary servers on neighbouring communication processors consists of requests sent from input server I to output server O and packets sent in the opposite direction; these opposite data streams alternate in time, so only a half duplex communication medium is needed per server pair. Let N be the number of links in the communication processor, the links and the corresponding input and output servers are numbered from O to Nlinks -1. Input server j (O $\leq$ j < Nlinks) has a shift register ireq.j from which requests are transmitted and a shift register ipack.j in which packets are received. Output server j receives requests in shift register oreq.j and transmits packets from shift register opack.j.

Transmission from $opack_v$.j may be destructive: the communication processor v does not need the information in the packet after transmission. However, transmission from $ireq_v$.j must be non-destructive: the information in the request will be used again by communication processor v when administering the receipt of a packet in answer to the request. Therefore either ireq.j must be a circular shift register or some additional memory must be used to save the request. Transmission from ireq.j or opack.j is started immediately after the value to be transmitted is assigned to the shift register. Receipt of a request in oreq.j or a packet in ipack.j is signalled by assigning true to the boolean Need_Packet.j or Packet_Delivery.j respectively; these booleans will be discussed much later.

Each communication processor has an amount of storage to buffer packets; "memsize" being the number of packets that can be buffered. The separate storage units are denoted by su.i ($1 \leq i \leq$ memsize); each storage unit can contain exactly one packet. Two small parts of each packet are defined to be interpreted by the communication processor; they are denoted by the fields su.i.dest and su.i.class. The field su.i.dest contains the final destination of the packet. The field su.i.class is used to guarantee deadlock free communication: this will be explained later.

Apart from a field indicating the final destination, a packet does not carry routing information with it. Packets are passed via one of the preprogrammed paths between source and destination. In general there is more than one such path, even if for example only shortest paths are used. Each communication processor has a routing table containing for each possible destination of a packet a boolean vector indicating those input servers via which a packet with that destination may make its next hop on its way to its destination. The contents of the routing table can be programmed by the data processor. The routing table on communication processor v is denoted by $rout_v$; for destination d and output server j we have the boolean vector $rout_v.d$ and the boolean $rout_v.d.j$. such that

$rout_v.d.j <=>$ a packet with destination d, once arrived on v, may make its next hop via output server j.

For each output server of the communication processor there is a data structure to administer the temporal order of arrival of those packets which may, according to the routing table, make their next hop via that output server. This data structure forms a double circularly linked list; for output server j of communication processor v it is denoted by $toa_v.j$ (toa standing for temporal order administration); the elements of the linked list are denoted by $toa_v.j.i.p$ ($0 \leq i \leq$ memsize, $p \in \{prev,next\}$). When the packet in storage unit $su_v.i$ may, according to the routing table, make its next hop via output server j and $toa_v.j.i.next = n$ and $toa_v.j.i.prev = p$, then

(1) $toa_v.j.n.prev = i$ and $toa_v.j.p.next = i$;

(2) if $n > 0$ then $su_v.n$ contains a packet which arrived in v after the packet in $su_v.i$ and which may also make its next hop via output server j; if $n = 0$, then $Su_v.i$ contains the youngest, i.e. last arrived packet which may make its next hop via output server j;

(3) if $p > 0$ then $su_v.p$ contains a packet which arrived in v before the packet in $su_v.i$ and which may also make its next hop via output server j; if $p = 0$ the $su_v.i$ contains the oldest, i.e. first arrived packet which may make its next hop via output server j. When a packet arrives in communication processor v and is stored in $su_v.i$, then the field $su_v.i$ dest is used to index the routing table and the arrival of the packet is administered in parallel in the temporal order administration of all output servers indicated by the boolean vector $rout_v.(su_v.i.dest)$, according to the following algorithm.

```
add_to_toa(i)
| [ int d
  ; d := su.i.dest
  ; par ([] j
         : 0 <= j < Nlinks
         : rout.d.j
         ->  | [ int youngest
              ; youngest := toa.j.0.prev
              ; toa.j.i.prev := youngest
              ; toa.j.i.next := 0
              ; toa.j.0.prev := i
              ; toa.j.youngest.next := i
             ]|
        )
   rap
   [| .
```

When the packet in $su_v.i$ is transmitted to a neighbouring communication processor, then it is removed in parallel from the temporal order administration according to the following algorithm.

```
remove_from_toa(i)
|[ int d
 ; d := su.i.dest
 ; par ([] j
        : 0 <= j < Nlinks
        : rout.d.j
        -> |[ int n, p
           ; n := toa.j.i.next
           ; p := toa.j.i.prev
           ; toa.j.n.prev := p
           ; toa.j.p.next := n
          ]|
       )
   rap
   ]| .
```

The temporal order administration for output server j is used when a request is received from the neighbouring communication processor to which link j is connected. Then the linked list is followed to find the oldest packet, if any, matching the request. At this moment the matching operation between a request r and a packet p will be denoted by the boolean function match(r,p), which is true if the matching succeeds; later on this matching will appear to be a very simple number comparison.

The algorithm to find the oldest packet matching the request is given below; when a packet is found, its nonzero index in the storage units su is given, otherwise zero is returned.

```
int find__packet(j, request)
|[ int try
; try : = toa.j.O.next
; do try <> O and not match(request, su.try)
-> try : = toa.j.try.next
od
; return try
]| .
```

Part of the temporal order administration from output server O is also used to maintain a singly linked list of free storage units. An additional variable freehead is used as the list header. The index of a free storage unit is obtained and removed from the free list by the following algorithm.

```
int obtain__su()
|[ int result
: result : = freehead
; freehead : = toa.O.result.next
; return result
]| .
```

When i is the last element of the free list, then toa.O.i.next = O and when the free list is empty, then freehead = O. However, this need never be checked, as obtain__su() is only called when other administration guarantees that the free list is not empty.

A storage unit is appended to the free list by giving its index as an argument to the following algorithm.

```
free__su(i)
|[ toa.O.i.next : = freehead
; freehead : = i
]| .
```

In the data processing system made in accordance with the present invention deadlock and starvation is avoided by a technique called "class climbing". It can be shown mathematically that the communications network can be kept free of deadlock as long as packets which have reached their destination are removed from the network by the interface processor.

Before describing the various data structures in the communication processor, the principles of the strategies used in the communication processor to avoid deadlock and starvation will be presented.

The main strategy used in the communication processor to avoid deadlock is what is referred to herein as class climbing. This strategy is as follows. To each packet in the network a class is assigned; classes are numbered from O to Nclass - 1, where Nclass is the number of classes available; the same class can be assigned to different packets. The class of the packet in storage unit $su_y.i$ can be found in the field $su_y.i.class$. Further for each class an acyclic directed graph is superimposed on the physical communication network by assigning a direction to each of the physical links. The class of a packet is not changed as long as the packet travels according to the direction of the acyclic directed graph associated with its class. The class of a packet is incremented by one each time the packet makes a hop against the direction of the acyclic directed graph associated with its current class; hence the name class climbing. It is assumed that the packets injected into the network start in a low enough class and that the routing table is such that the class of a packet need never be incremented above Nclass - 1. This can be checked statically. With "packet p is n state (v, c)" is meant that p has class c and is in communication processor v. Be $|_c$ the relation corresponding to the acyclic directed graph associated with class c, then the relation $|$-defined below gives all permitted state transitions of a packet:

$$(v_0,c_0) |\text{-} (v_1,c_1) <=> \{v_0,v_1\} \text{ is a physical link}$$
$$A \ c_0 \leq c_1 \leq c_0 + 1$$
$$A \ (c_0 = c_1 <=> v_0 |\text{-}_{c_0} v_1),$$

where A denotes AND.

Obviously the state transition graph is acyclic and this implies that a non-unique function Number can be found which maps all the states one to one to the numbers 1..Nstat (Nstat is the number of states), such that $(v_0,c_0) |\text{-} (v\cdot,c_1) \rightarrow Number.(v_0,c_0) > Number.(v_1,c_1)$.

The inverse function of Number is called State. It can be proved that the communication network is free from starvation (implying that it is free from deadlock) by proving for each state (starting with state State.1 and then recursively for states State.2,..., State.Nstat) that under certain conditions progress is guaranteed for each packet in that state. However, in the interests of brevity the proof will not be given here. For the principle of class climbing as described above there need not be any specific relation between the acyclic directed graphs associated with the various classes. For example each class has an acyclic graph which is different from all the acyclic graphs associated with the other classes; or all the acyclic graphs are the same; or all the odd classes have the same acyclic graphs and all the even classes have the same acyclic graphs which are different from the graphs of the odd classes. In the presently described data processing system, however, there are only two different acyclic directed graphs and they are each other's opposite in the sense that they assign opposite directions to each of the physical links. One of these graphs is used for all even classes, the other one for all odd classes. This decision has an important consequence because by specifying the acyclic directed graph for class O, the rest will be known. Any packet travelling according to the direction of that basic graph has an even class or its class has just been incremented from odd to even; any packet travelling in the opposite direction has an odd class or its class has just been incremented from even to odd.

A simplified example of class climbing will now be described. Simply stated the essential points to bear in mind are:

1) The packet storage units is divided into classes (0, 1, 2, 3... etc.) and there is at least one storage unit per class.

2) The length of a packet is extended by the inclusion of an indication of a class field (0, 1; 2, 3, ... etc.). Initially the class of a packet is zero.

3) In order to store a packet in a storage unit the class of a packet must be equal to or greater than the class of the storage unit in which the packet is stored.

4) An acyclic directed graph is superimposed on the network graph.

5) The class of a packet which travels across a link following the superimposed arrow must be even.

6) The class of a packet which travels across a link against the superimposed arrow must be odd.

7) The class of a packet stays the same or increases by 1 during a hop. This means that whilst a packet is being switched from one communication processor to another it keeps the same class number whilst it is following (or against) the superimposed arrow but as soon as a hop is in the opposite direction to the immediately preceding direction then the class number is incremented by one.

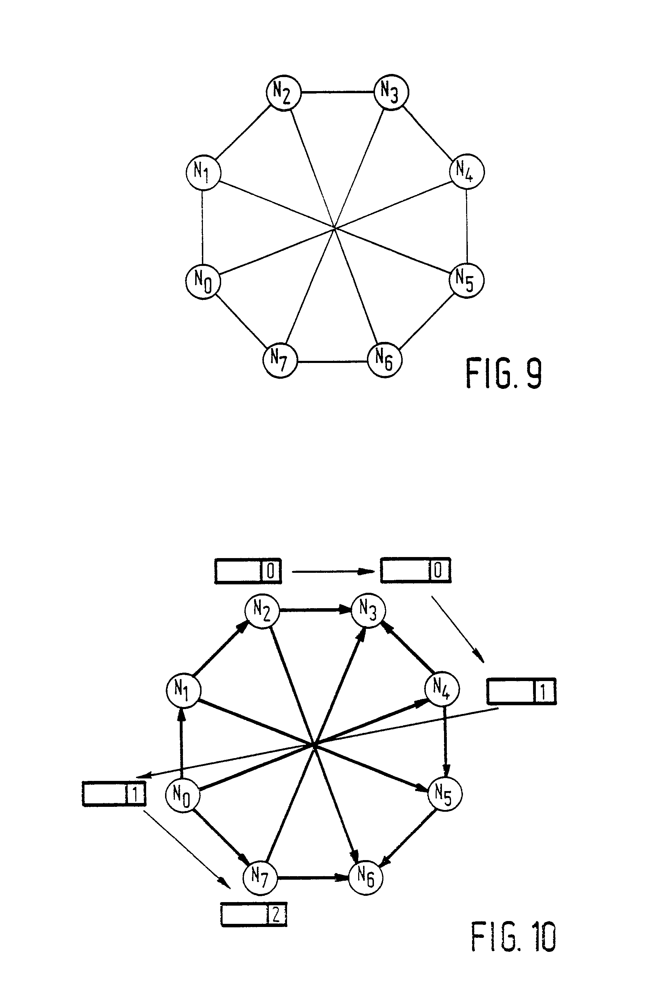

Figure 9 illustrates a network of 8 nodes $N_0$ to $N_7$ with node i coupled to nodes (i + 1), (i-1) and (i + 4).

Figure 10 illustrates an acyclic directed graph superimposed on the network of nodes shown in Figure 9. The arrow heads indicate the direction of the superimposed arrows and the class of the packet is even when trravelling in this direction. Figure 10 also illustrates an example of how a packet generated in node 2 travels to node 7 via nodes 3, 4 and 0. The packet has been extended by an indication of the class. The packet generated at node 2 has the lowest class, 0. At node 3 it travels against the superimposed arrow to reach node 4 and in consequence its class is incremented by 1 so that it has the value 1 which is odd which means it transfers to a new acyclic directed graph which in the present example is the opposite of the acyclic directed graph shown in Figure 10. The hop from node 4 to node 0 is also against the direction of the superimposed arrow so that the class remains unchanged. The final hop from node 0 to node 7 is in the direction of the superimposed arrow and then the class is incremented again by 1 to become 2 which is even and hence another acyclic directed graph is concerned, which is equal to the acyclic directed graph drawn in Figure 10.

The link protocol of exchanging requests and packets between neighbouring communication processors will now be described. In a network with diameter d, at least 2·d classes are required so that Nclass ≥ 2·d. The classes are numbered from 0 to Nclass-1, where Nclass is the total number of classes available. The classes can be realised as a single physical network or as two or more virtual networks using a single physical network. Assume for example Nclass = 16, then the class of a packet can be coded in four bits. The introduction of classes influences the link protocol as follows:

1) The action "reserve storage unit" results in a request which is in fact a class number; the meaning of a request with class number n is:
a storage unit was reserved, but only a packet with class at least n may be stored in it.

Most of the time, when storage units are amply available, requests will contain class number zero, so that a packet of arbitrary class may be stored.

2) The "request for a packet" transmitted by some input server to the corresponding output server on a neighbouring CP contains four bits of information: the class number of the request.

3) The action "retrieve packet" cannot simply take the packet indicated by the head of the packet queue; instead it must inspect the queue for the oldest reference to a packet matching the request. This matching is not simply:
the class of the packet must be at least the class n of the request. That is because the class of a packet sometimes changes (deterministically) just before it is transmitted. Such a change will always be an increment of exactly 1 if the direction of hopping changes as explained with reference to Figure 10. The matching operation can be formulated as:

the class of the packet after transmission (so possibly 1 higher than its current class) must be at least the class n of the request.

The consequence of this is twofold:

a) the class of a packet in the packet storage must sometimes be inspected by the CP;

b) the class of a packet must sometimes be changed by the CP, but only just before transmission.

The link protocol between connected complementary servers now looks like this:

1) the input server sends a request (4 bits) to the output server;

2) the output server reacts by sending

- either a cancel packet (1 bit, say true);

- or a real data packet:

1 bit false to indicate that it is not a cancel packet;

4 bits for the class;

10 bits for the destination;

246 bits for uninterpreted data.

The destination bits of a packet are interpreted by the CP to put the packet in the correct queues; those bits are never changed by the CP. The class bits of a packet are interpreted by the CP and sometimes changed (just before transmission) to avoid deadlock.

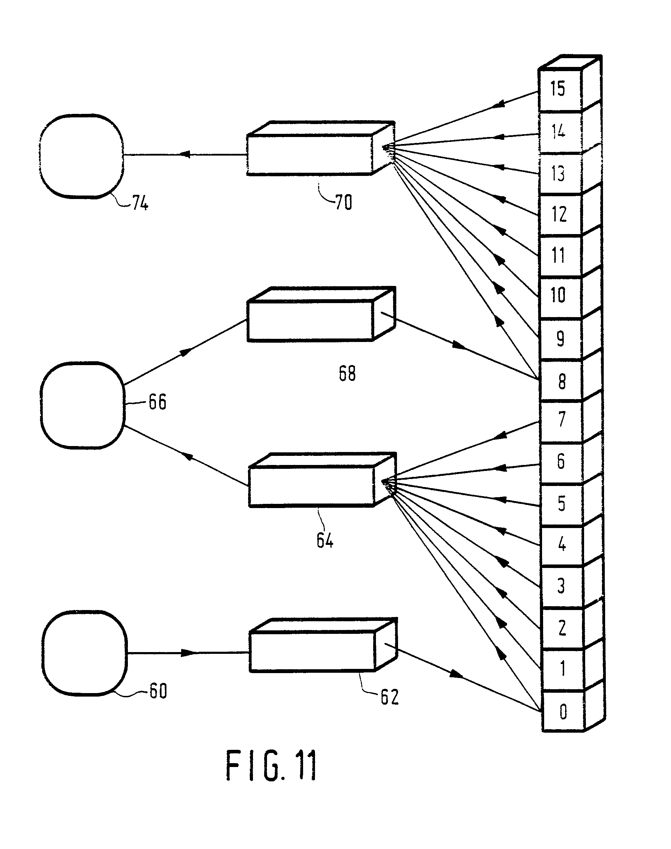

An embodiment of two virtual networks using one physical network of $2^*d$ classes, where $d = 8$, is illustrated in Figure 11. The physical network is constituted by the classes 0 to 15 is divided so that the classes 0 to 7 comrpise a lower virtual network and the classes 8 to 15 comprise an upper virtual network. Data produced by a data process 60 is inserted by way of an interface 62, which may comprise a first in, first out (FIFO) buffer, into a class of the lower virtual network such that it will not be incremented above class 7. For simplicity the interface 62 has been shown connected to class 0. During the travel of a packet to its final destination its class can be incremented. At its destination the packet is stored, that is, it leaves the network by way of another interface 64 which may also comprise a FIFO. Data stored at the interface 64 must be consumed in a process 66. The consumption of the data in the process 66 is not an unconditional obligation because it may also produce data which is stored in a further interface 68, which is the interface to the higher virtual network and which may comprise a FIFO. The data is stored in such a class that it will not be stored above a class 15. For simplicity of illustration the interface is connected to class 8. Outputs of the classes of the higher network are supplied to a fourth interface 70, which may comprise a FIFO. The interface 70 is coupled to a consuming data process 74 which has the unconditional obligation to consume data. The processes 60, 66 and 70 are processes which may be carried out on one or more processors. It is possible for more than one of the processes to be carried out on one and the same processor. The operations of the virtual networks are completely independent of each other so that a user will see two incoming and two outgoing FIFO queues, that is one in each direction for the respective virtual networks.

Each communication processor CP has a boolean table Arrowhead.j ($0 \leq j < $ Nlinks) which gives for each of its links the direction of that link according to the basic acyclic directed graph. The following predicates hold

$Arrowhead_v.j < = >$ packets sent by v via output server j have odd class

$Arrowhead_v.j < = >$ packets received by v via input server j have even class

When none of the packets in the temporal order administration of an output server matches the request received by the output server, a special message called "cancel" is sent instead of a normal packet. To avoid this as much as possible, the request always must have a class number as low as possible. The following administration is used to establish this. The involved data structures and some invariants governing their behaviour will be presented. After the introduction of some additional data structures used to avoid starvation, some algorithms which use all these data structures will then be presented.

The class administration consists of an array of counters Cnt.i ($0 < i < $ Nclass), an array of booleans Reservable.i ($0 < i < $ Nclass) and a counter Reservable_zero. Before the invariants governing the behaviour of the class administration can be given, two definitions are needed. Firstly, let $cpc_v.i$ be the number of storage units of communication processor v reserved for or filled by packets of class i, $0 \leq i \leq $ Nclass; cpc stands for "count per class". Secondly, let d.i for $0 \leq i < $ Nclass be recursively defined by

$d.i = 0$     if $i = $ Nclass

$d.i = 0$ max $(d.(i + 1) - 1 + cpc.i)$     if $0 < = i < $ Nclass

Now the following predicates are invariantly true:

Cnt.i = d.i     for 0 < i < Nclass

Reservable.i < = > d.(i + 1) = 0 A cpc.i = 0     for 0 < i < Nclass

Reservable_zero = memsize + 1 - Nclass - d.1 - cpc.0

Note that the values of cpc.i completely determine the values of the variables and that, conversely from the values of the variables the values of cpc.i can be deduced as follows

```
cpc.i = if i = 0

           -> memsize + 1 - Nclass - Cnt.1 - Reservable_zero

           [] 0 < i < Nclass

           -> if Reservable.i

              -> 0

              [] not Reservable.i

              -> if 0 < i < Nclass - 1

                 -> Cnt.i - Cnt.(i + 1) + 1

                 [] i = Nclass - 1

                 -> Cnt.i + 1

                 fi

           fi

        fi.
```

This means that thusfar the variables are nothing more than an intricate bookkeeping of the values of cpc.i. Additionally for the network to be free from deadlock the predicate

d.0 ≤ memsize - Nclass

must be kept invariantly true; to check this invariant in terms of the cpc.i in which d.0 is defined is quite complex. However to check this invariant in terms of the introduced variables is quite straightforward. According to the definition of d.0 the invariant is equivalent to (memsize - Nclass ≥ 0) A (memsize + 1 - Nclass - d.1 - cpc.0 ≥ 0). The first inequality is a design constraint: Nclass and memsize must be chosen such that there is at least one storage unit per class. The second inequality is equivalent to

Reservable_zero ≥ 0

which is indeed simple to check. It can be shown that

d.0 ≤ memsize - Nclass => (Sum j: 0≤j< Nclass: cpc.j) ≤ memsize

so that the physical restriction of the memory size is met. As there is only one simple constraint on the value of Reservable_zero, two other benefits of this class administration can easily be shown. Firstly, as long as Reservable_zero is positive, storage units can be reserved for class 0; such a reservation increments cpc.0, administered by simply decrementing Reservable_zero and nothing more. Secondly, when Reservable.i is true for certain i, 0 < i < Nclass, then a storage unit can be reserved for class i; this increments cpc.i, administered by making Reservable.i false and nothing more.

Other operations on this administration are more complex, as will be shown below; a typical example occurs when upon request for some class i a packet is transmitted with class j, i<j; this increments cpc.j and decrements cpc.i, possibly causing a lot of changes in the administration, but not touching the invariant Reservable_zero ≥ 0. This justifies the protocol in which upon request for class i a packet with a higher class than i may be transmitted

It has been mentioned previously that requests must always have a class number as low as possible. However, to avoid starvation the communication processor must distribute all requests in a fair way over all its neighbours. Consequently some fairness administration is provided in each communication processor. This administration consists of two parts, one part for fair distribution of requests for class 0 and one part for all nonzero classes. Referring initially to the part for class 0. For class zero a boolean array Fair_zero.j (0 ≤ j < Nlinks) and a round robin counter round robin are used. The boolean Fair_zero is true if it is allowed to reserve a storage unit for class 0 for input server j. The following predicate is kept invariantly true:

($N$ j: $0 \leq j < $ Nlinks: Fair_zero.j) = Reservable_zero min Nlinks. This means that as long as Reservable_zero $\geq$ Nlinks, all booleans Fair_zero.j are true and there is no restriction to reserve storage units for class 0; only when Reservable_zero < Nlinks, some booleans Fair_zero.j are false and when in that case Reservable_zero is incremented, the counter round robin is used to determine in a fair way which of the false booleans may be made true. The value of round_robin is always such that Fair_zero.round_robin is the last boolean made true in this way. The following algorithms show how to adjust the fairness administration when Reservable_zero must be decremented (in behalf of some input server j given as an argument) or incremented.

```
decrement_Reservable_zero(j)
|[ Reservable_zero := Reservable_zero - i
 ; if Reservable_zero >= Nlinks
    -> skip
    [] 0 <= Reservable_zero < Nlinks
    -> Fair_zero.j := false
    fi
]|


increment_Reservable_zero()
|[ if Reservable_zero > Nlinks
    -> skip
    [] 0 <= Reservable_zero < Nlinks
    -> round_robin := (round_robin + 1) mod Nlinks
       ; do Fair_zero.round_robin
          -> round_robin := (round_robin + 1) mod Nlinks
          od
       ; Fair_zero.round_robin := true
    fi
 ; Reservable_zero := Reservable_zero + 1
]| .
```

Two other algorithms can now be specified for the class administration. The first one is to administer when a storage unit reserved for or filled by a packet of class t is released. The second one is to administer when the class t0 for which a storage unit was reserved is exchanged for a possible higher class t1. This can happen in two cases. The first case is when for an input server a storage unit was reserved of even (odd) class and the input server may according to the protocol only emit requests for odd (even) class. The second case is when a request for some class t0 was emitted and a packet of possibly higher class t1 is received.

```
release (t0)
|[ int i
 ; i := t0
 ; do i <> 0 and Cnt.i <> 0
   -> Cnt.i := Cnt.i - 1
    ; i := i - 1
   od
 ; if i = 0
   -> increment_Reservable_zero()
   [] i <> 0
   -> Reservable.i := true
   fi
]|


exchange (t0, t1)
|[ int i
 ; i := ti
 ; do i <> t0 and not Reservable.i
   -> Cnt.i := Cnt.i + 1
    ; i := i - 1
   od
 ; if i <> t0
   -> Reservable.i := false
      release (t0)
   [] i = t0
   -> skip
   fi
]| .
```

Both algormithms contain a loop that can be parallelized. For the loop in the routine release (t0):

```
        i := (Max j: j = 0 or (0 < j <= t0 and Cnt.j = 0): j)
      ; par ([] j
             : 0 < j < Nclass
             : i < j <= t0
         -> Cnt.j := Cnt.j - 1
             )
        rap
```

and the loop in the routine exchange (t0, t1) can be transformed to:

14

```
i := (Max j: j = t0 or (t0 < j <= t1 and Reservable.j): j)
; par ([] j
        : 0 < j < Nclass
        : i < j <= t1
      -> Cnt.j := Cnt.j + 1
      )
    rap
```

The fairness administration for the non zero classes consists of a two dimensional boolean array Fair.i.j., $0 < i <$ Nclass. $0 \le j <$ Nlinks. For each non zero class i there is always exactly one input server j for which Fair.i.j is true. The meaning of Fair.i.j being true is that only input server j has the right to reserve a storage unit for class i; of course input server j may only do that when the class administration allows this by making Reservable.i true. After input server j has used its privilege, it must pass it to another input server by making Fair.i.j false and Fair.i. ((j + 1) mod Nlinks) true. So the following algorithm enables a storage unit for input server j to be reserved. Upon success the class for which the storage unit is reserved is returned; upon failure -1 is returned.

```
int reserve_storage_unit(j)
I[ int result
 ; if Fair_zero.j
   -> result := 0
    ; decrement_Reservable_zero(j)
   [] not Fair_zero.j and (E i: 0 < i < Nclass: Reservable.i and
      Fair.i.j)
   -> result := (Min i: 0 < i < Nclass and Reservable.i and Fair.i.j.: 1)
    ; Reservable.result := false
    ; Fair.result.j := false
    ; Fair.result.((j+1) mod Nlinks) := true
   [] not Fair-zero.j and not (E i: 0 < i < Nclass: Reservable.i and
      Fair.i.j)
   -> result := -1
   fi
 ; return result
]| .
```

The algorithms for different input and output servers of one communication processor cannot be executed fully in parallel. These algorithms use some shared data structures to which the servers have mutually exclusive access, so the algorithms must be sequentialized in a proper way. The communication processor has some administration to take care of this. It consists of three boolean arrays: Compose__Request.j, Need__Packet.j and Packet__Delivery.j, (0≤j<Nlinks). The meaning of these booleans is as follows:

Compose__Request.j     for input server j a request must be composed;

Need__Packet.j     output server j has received a request and needs a packet matching the request;

Packet__Delivery.j     input server j has received a packet and wants to deliver it to the packet storage.

This administration is scanned in an infinite loop by the so called scheduler, which executes the appropriate actions. Those actions are called store_packet(j), emit_request(j) and retrieve_packet(j) and will be discussed below. The scheduler can be considered as the "main program" of the communication processor.

```
scheduler()
|[ int j
; j := 0
; do true
    -> if Packet_Delivery.j
        store_packet(j)
    [] not Packet_Delivery.j
    -> skip
    fi
    ; if Compose_Request.j
    -> emit_request(j)
    [] not Compose_Request.j
    -> skip
    fi
    ; if Need_Packet.j
    -> retrieve_packet(j)
    [] not Need_Packet.j
    -> skip
    fi
    ; j := (j + 1) mod Nlinks
    od
]| .
```

As stated earlier, output server j indicates the receipt of a request in oreq.j by assigning true to Need_Packet.j and input server j signals the receipt of a packet in ipack.j by assigning true to Packet_Delivery.j. Those booleans are reset to false again by the actions retrieve_packet(j) and store_packet(j) respectively. The boolean Compose_Request.j is set to true by the action store_packet(j) and possibly reset to false by the action emit_request(j).

When Compose_Request.j is true, the scheduler executes the routine emit_request(j) to compose an appropriate request for input server j. This is not always possible. When it succeeds, Compose_Request.j is made false; when it fails, Compose_Request.j is left true so that in the next cycle of the scheduler it is tried again. There are two cases in which emit_request(j) fails. The first case arises when the routine reserve_storage unit(j) returns -1 indicating that nothing can be reserved at the moment. The second case arises when reserve_storage_unit(j) returns the maximum class number Nclass -1 which is odd (even) where the boolean Arrowhead.j indicates that the request to be composed must be even (odd).

16

```
emit_request(j)
|[ int c
 ; c := reserve_storage_unit(j)
 ; if c <> -1
   -> if is_even(c) <=> Arrowhead.j
      -> ireq.j := c
       ; Compose_request.j := false
      [] is_odd(c) <=> Arrowhead.j
      -> if c <> Nclass-1
         -> exchange(c, c+1)
          ; ireq.j := c+1
          ; Compose_Request.j := false
         [] c = Nclass-1
         -> release(j)
         fi
      fi
   [] c = -1
   -> skip
   fi
]| .
```

This routine can be optimized considerably by inserting all the tests of c directly in the algorithm for reserve_storage_unit(j); especially the complexity of exchange (c, c + 1) can be drastically reduced then.

When Need_Packet.j is true, the scheduler executes the action retrieve_packet(j) to supply to output server j a packet matching the received request. First find_packet(j) is called to select a packet. If one is found, it is checked whether or not its class must be incremented; then the packet is supplied to output server j and finally some previously defined routines are executed to adjust all administration.

```
retrieve_packet(j)
|[ int i, request
 ; request := oreq.j
 ; i := find_packet(j, request)
 ; if i <> 0
   -> |[ int c
       ; c := su.i.class
       ; if is_odd(c) <=> is_odd(request)
         -> skip
         [] is_even(c) <=> is_odd(request)
         -> su.i.class := c+1
         fi
       ; opack.j := su.i
       ; release(c)
       ; remove_from_toa(i)
       ; free_su(i)
       ]|
   [] i = 0
   -> opack.j := cancel
   fi
 ; Need_Packet.j := false
]| .
```

When Packet__Delivery.j is true, the scheduler executes the routine store__packet(j) to handle the packet received by input server j. When the received packet is a cancel packet, the reserved storage unit is released; otherwise the class administration is adjusted, a free storage unit is obtained from the free list to store the packet in and the temporal order administration is updated.

```
store_packet(j)
|[ if ipack.j = cancel
    -> release(ireq.j)
   [] ipack.j <> cancel
    -> exchange(ireq.j, ipack.j.class)
   ; |[ int i
      ; i := obtain_su()
      ; su.i := ipack.j
      ; add_to_toa(i)
      ]|
   fi
   ; Packet_Delivery.j := false
   ; Compose_Request.j := true
]| .
```

This completes the algorithmic description of the communication processor.

The communication processor can be implemented as a VLSI circuit and an example of a Floorplan is given in Figure 11.

The parameters of the communication processor under consideration have the following values:

Nlinks = 9 (eight input and output servers for the links between neighbouring communication processors, and one input and output server for the link between the communication processor and the corresponding data processing element), Nclass = 16, memsize = 64 and the length of a packet is 256 bits of which 10 bits are used for the destination and 4 bits for the class. The ipack and opack shift registers 22, 24 respectively of the input and output servers fit very nicely around the 64 x 256 bit memory matrix of the packet storage (su) 26. Such a layout makes it possible to copy a packet from ipack 22 to su 26 or from su 26 to opack 24 within one memory cycle of the processor, which is very attractive with respect to the delay and throughput of the packets and with that the performance of the processor. A substantial part of the chip is occupied by the routing table (rout) 28. This table, consisting of 1024 9-bit entries, is implemented as 4 memory matrices of 256 x 9 bits each which are addressed by the destination field of a packet stored in ipack 22, su 26 or opack 24. The temporal order administration (toa) is composed by the area 30 of the floorplan. The accessed 9-bit vector indicates via which output servers a packet can be forwarded, and with that determines which toa.j must be updated at the arrival and departure of a packet. Each toa.j implements a double linked list. Each cell toa.j .i of the double linked list contains fields next and prev. These fields can take any of the values $i(0 \leq i < 64)$, so toa.j can be implemented as a 64 x 12 bit memory matrix. In this exemplary layout the size of a cell of the shift registers ipack and ireq 22, and opack and oreq 24 is 4 times the size of a normal square memory cell from which su, rout and toa are constructed. The size of the registers described below are not scaled in the real proportions.

The variable freehead 32 contains the address of the first free storage unit, and also refers to the first element of the free list implemented in toa.0. It can take any of the values $i(0 \leq i < 64)$ and is implemented as a 6-bit register. The variables Cnt.i $(0 \leq i < 16)$ 34 and Reservable_zero 36 are implemented as independently operating 6-bit up/down counters. Round_robin 38 and Fair_zero 40 are simple 9-bit registers (one bit per link). The remaining part of the buffer management administration deals with the classes 1 up to and including 15. The two dimensional boolean array Fair 42 together with the boolean vector Reservable 46 can be implemented as a 10 x 15 bit matrix of memory cells that can do some special operations such as bit_set, bit_reset and bit_match.

The variables Arrowhead 48, Compose_Request 50, Packet Delivery 52 and Need_packet 54 are implemented as 9-bit registers.

EP 0 294 890 A2

## Claims

1. A computer information packet switching system comprising a plurality of stations which are interconnected by means of a connection network, wherein each station has means for communicating with at least one other station, means for the transient storage of packets of information and means for issuing a request for the transfer of an information packet from another station to its own station.

2. A system as claimed in claim 1, characterised in that the connection network has a diameter (d) at least equal to d = 1, in that each connection between two stations has a preferred direction such that all rings which can be formed from a series of at least two connections have acyclically oriented preferred directions, in that the packet storage in each station comprises a plurality of storage units divided into classes arrayed in an ascending order series, in that each station has an allocation element for allocating locally formed information packets to one of the plurality of storage units and for allocating information packets received through the network to a storage unit of the same class as the storage unit to which information was allocated in the previous station if there is no alternation between the preferred directions of the incoming network connection and the outgoing network connection, but to the storage unit of a class raised by one with respect to the class of the storage unit to which the information packet was allocated in the previous station if there is an alternation between the preferred directions of the incoming network connection and the outgoing network connection.

3. A system as claimed in claim 1 or 2, characterised in that each station comprises a packet storage and a plurality of pairs of input and output servers.

4. A system as claimed in claim 3, wherein each station has means providing a temporal order administration for the input and output servers.

5. A system as claimed in claim 4, characterised in that each storage unit of a station has a unique address, said plurality of storage units of each station being formed by empty storage units which are reservable by any one of the input servers of the station, reserved storage units which have been reserved by one or more of the input servers of the station, and full storage units filled with information packets by the input servers of the station, and in that the temporal order administration of the station is arranged to track the condition of the storage units.

6. A system as claimed in claim 5, characterised in that the central administration of each station has means for storing the addresses of empty and reserved storage units of the station and for assigning an address to an information packet when deliverd by an input server of the station.

7. A system as claimed in claim 6, characterised in that each station has a temporal order administration for forming queues of addresses of stored information packets on the output servers, addresses of the same information packets which may be routed differently being present in different queues, and in that the output server transmitting an information package has means for deleting the address(es) of duplicate(s) of the transmitted information packet from another or other packet queue(s) of the same communication processor.

8. A system as claimed in claim 7, characterised in that each station includes a routing table containing for each destination a list of bits indicating for each output server whether or not an incoming packet having that destination in the system must be added to the temporal order administration of the output server.

9. A system as claimed in claim 1, characterised in that an anti-deadlock protocol is superimposed on the connection network.

10. A system as claimed in claim 9, characterised in that the anti-deadlock protocol in such that a class (in the range 0 to Nclass -1, Nclass being the number of classes available) is assigned to each packet in the network for each of the classes an acyclic directed graph is superimposed on the physical network by assigning a direction to each of the physical links, the class of a packet remains as it is as long as the packet travels according to the direction of the acyclic directed graph associated with its class, and the class of a packet is incremented by one each time the packet makes a hop against the direction of the acyclic directed graph associated with its current class.

11. A system as claimed in claim 9, characterised in that the protocol comprises superimposing at least one acyclically directed graph on the network.

12. A system as claimed in claim 11, characterised in that the acyclically directed graph comprises a plurality of directed links, and wherein each station has means to assign a class number to an information packet originated at the station or change a class number of an information packet received by the station and to be transmitted to another station, whereby an information packet retains its assigned class number whilst it hops between stations in the direction of the directed links but has its class number incremented

20

when a hop or the first of a succession of hops is against the direction of the directed links associated with its class, the class number is incremented again when a hop or the first of a succession of hops is in the direction of the directed links, and so on.

13. A system as claimed in claim 10 or 12, characterised in that transient storage means comprises at least one storage unit for each class.

14. A system as claimed in claim 10, characterised in that the transient storage means includes means to limit the temporal acceptance of an information packet to a particular class or particular range of classes.

15. A system as claimed in claim 1, characterised in that said means for requesting the transfer of an information packet from another station to its own station, includes as part of a request a class number N indicative of the fact that it is willing to receive a packet with a class of at least N but not less than N.

16. A system as claimed in claim 15, characterised in that each station further comprises means responsive to the receipt of a request for a data packet but not having a suitable data packet to send, for generating a signal cancelling the request for a data packet.

17. A system as claimed in claim 15 or 16, characterised in that each station further comprises administration means for processing a data packet having a class number greater than the class number requested.

18. A system as claimed in claim 1, characterised in that a physical network of communication processors and communication links is provided for the transfer of data packets between stations and in that the physical network is made visible to the stations as at least two virtual networks.

19. A system as claimed in claim 18, characterised in that the virtual networks are linearly ordered from low to high and in that in order to avoid deadlock and starvation consumption from the higher or highest virtual network is unconditionally obliged and consumption from the other or any other virtual network is obliged under the presupposition of absence of deadlock and starvation in all the higher virtual networks.

20. A system as claimed in claim 1 or any one of claims 9 to 18, characterised in that the transient storage means of each station comprises a packet storage formed by a plurality of storage units, a plurality of input and output servers, means for giving an address of a storage unit to each information packet delivered by an input server, and means for directing said address to one or more output servers which can deliver the information packet to its destination station via a respective route.

21. A system as claimed in claim 20, characterised in that similarly addressed information packets are stored in queues at one or more output server of a station and the output servers of each station include means for deleting duplicately addressed information packets when one of the output servers is to transmit the relevant information packet.

22. A system as claimed in claim 21, characterised in that each station has a central administration for reserving an empty storage unit when an input server requests an information packet from a neighbouring station, for keeping track of the already reserved storage units and for keeping track of the full storage units.

23. A system as claimed in claim 22, characterised in that the central administration of each station forms a temporal set of addresses of the empty and reserved storage units and in that an output server transmitting an information packet returns the address of the newly emptied storage unit to said set.

24. A system as claimed in claim 20 when appended to claim 10, characterised in that said communicating means in each station includes a communication processor, and in that each communication processor comprises a fairness administration comprising a first part for the fair distribution of requests having the lowest class and a second part for the fair distribution of requests having a class higher than the lowest class.

25. A system as claimed in claim 24, characterised in that the first part comprises a boolean array Fair_zero ($0 < = j <$ Nlinks) and a round robin counter round_robin and in that the second part comprises a two dimensional boolean array Fair i.j., $0 < i <$ Nclass, where $0 < = j <$ Nlinks where i represents a non-zero class and j is an input server.

26. A station for use in an information packet switching system, said station comprising a communication interface, a data processor and a data bus interconnecting the communication interface and the data processor, the communication interface comprising a communication processor and an interface processor for coupling the communication processor to the data bus, wherein the communication processor comprises:

- input servers able to request a data packet from the interface processor or from an output server of the communication processor of another station to which it is connected, each said input servers being also able to receive a data packet which it had requested earlier,

- a packet storage in which data packets can be temporarily stored,

- output servers able to receive a request for a data packet from the interface processor or from an input server of the communication processor of another station to which it is connected, each said output server also being able to transmit a data packet for which it earlier received a request.
- a routing table indicating for each destination via which output servers a packet with that destination may make its next hop either to the interface processor or to a neighbouring station,
- a central administration able to instruct an input server to request a data packet, said central administration also being able to move a data packet received by an input server from that input server to the packet storage, said central administration also being able to move a data packet from the packet storage to an output server which had received a request, said data packet being allowed, according to the routing table, to make its next hop via said output server.

27. A station as claimed in claim 26, characterised in that the packet storage comprises a plurality of storage units and the communication processor comprises a central adminstration for reserving a storage unit as a preparation for the communication processor requesting a data packet from another station in the network.

28. A station as claimed in claim 27, characterised in that the communication processor in response to the receipt of a request for a data packet has means for producing a signal cancelling the request in the event of the communication processor not having a suitable data packet.

29. A station as claimed in claim 27 or 28, characterised in that the central administration comprises means for ensuring exclusive access of an input or output server to the packet storage.

30. A station as claimed in claim 27, 28 or 29, characterised in that the central administration maintains a temporal record of empty, reserved and full storage units.

31. A station as claimed in any of of claims 26 to 30, characterised in that the communication processor further comprises a temporal order administration (toa) for the output servers, said toa forming queues of addresses of full storage units allocated to the respective output servers on the basis that the outer servers can relay a data packet by one of the multiplicity of paths available to that data packet.

32. A station as claimed in claim 31, characterised in that the toa of the communication processor can supply for each output server the address of the oldest packet which may leave the communication processor via that output server and wherein the toa subsequently removes that address from the queues of all the output servers.

33. A station as claimed in any one of claims 20 to 32, characterised in that the storage units are divided into an ascending order of classes, there being at least one storage unit for each of the classes.

34. A station as claimed in claim 33, characterised in that the classes are divided into at least two virtual networks.

35. A station as claimed in claim 33 or 34, characterised in that the communication processor comprises means for incrementing the class of a data packet first prior to its transmission.

FIG. 1

FIG. 2

FIG. 3

FIG. 4

FIG. 5

FIG. 6

FIG.7

FIG. 8

FIG. 9

FIG. 10

FIG. 11

FIG.12